# EUROPEAN PATENT SPECIFICATION

(11) **EP 2 824 084 B1**
(45) Date of publication and mention of the grant of the patent: **07.12.2016**
(21) Application number: 13758434.8
(22) Date of filing: 26.02.2013
(51) Int. Cl.: C03B 5/187, B01F 15/00, B21K 1/10, B23P 15/00, C22F 1/18, B01F 7/00, B21C 37/15, C03B 5/167, B23K 31/02

(54) **STIRRER SHAFT PIPE AND METHOD FOR PRODUCING SAME**
RÜHRWELLENROHR UND VERFAHREN ZUR HERSTELLUNG DAVON
TUBE D'ARBRE D'AGITATEUR ET SON PROCÉDÉ DE PRODUCTION

(30) Priority: 07.03.2012 JP 2012050146
(43) Date of publication of application: 14.01.2015
(73) Proprietor: Tanaka Kikinzoku Kogyo K.K., Chiyoda-ku Tokyo 100-6422 (JP)
(72) Inventor: TAKAGI, Yoshikazu, Isehara-shi Kanagawa 259-1146 (JP); SUZUKI, Toshiya, Isehara-shi Kanagawa 259-1146 (JP)
(74) Representative: Boult Wade Tennant
(86) International application number: PCT/JP2013/054903
(87) International publication number: WO 2013/133084

(56) References cited:
- JP-A- H06 107 419
- JP-A- H07 223 823
- JP-A- 2006 188 375
- JP-A- 2010 265 505
- US-A- 4 525 433
- US-A1- 2012 015 210
- DATABASE WPI Week 200656 20 July 2006 (2006-07-20) Thomson Scientific, London, GB; AN 2006-542511 XP002744352, -& JP 2006 188375 A (TANAKA KIKINZOKU KOGYO KK) 20 July 2006 (2006-07-20)

## Description

### BACKGROUND OF THE INVENTION

### FIELD OF THE INVENTION

The present invention relates to a stirrer shaft pipe constituting a stirrer for glass production for stirring and homogenizing glass in a molten state in manufacturing processes of various glass products, and a method for producing the stirrer shaft pipe.

### DESCRIPTION OF THE RELATED ART

In each of the manufacturing processes of various glass products, a glass material that is prepared/mixed is melted, the glass in the molten state is stirred, and thereby homogenization of the components and uniformization of the refraction index are performed, after which, the glass material is molded, whereby the glass product is made. In order to manufacture glass excellent in quality, the stirring step is especially important.

In the stirring step of molten glass, a stirrer for glass production is usually inserted into a molten glass tank and is rotated, whereby the stirring step is performed. In the stirrer for glass production, a stirring blade is protrusively provided at a shaft to be a rotating shaft. Further, as for these devices (the molten glass tank, the stirrer for manufacture) that are provided for glass production, those formed from platinum materials such as an oxide-dispersion-strengthened platinum alloy and a platinum-rhodium alloy (sometimes called strengthened platinum in general) become mainstream. This is because platinum materials are excellent in mechanical characteristics at a high temperature, especially in high-temperature creep strength. This is further because platinum materials are also chemically stable, less corroded by molten glass, and suitable for manufacture of high-quality glass. US 4525433 A relates to a composite material. US 2012015210 A relates to an oxide-dispersion-strengthened platinum material and method for producing be same. JP 2006188375 A relates to a stirrer for manufacturing glass.

### Prior Art Documents

### Patent Documents

[Patent Document 1] Japanese Patent Application Laid-Open No. 2004-149338

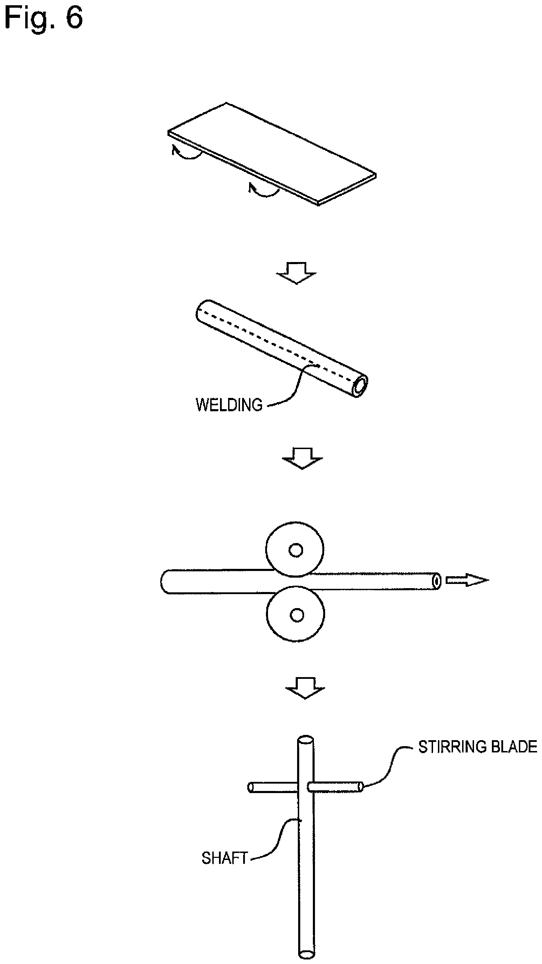

Fig. 6 is a view explaining a production process of a general stirrer for glass production. First, an alloy ingot is subjected to rolling or the like, and a rectangular plate material is prepared. The rectangular plate material is rolled, and butt joints of both end portions are joined to each other, whereby the rectangular plate material is formed into a pipe shape. Next, the pipe is drawn with a drawbench or the like, whereby a shaft of a predetermined size and wall thickness is produced. Subsequently, stirring blades in a predetermined shape are joined to the shaft, whereby a stirrer is provided.

A stirrer for glass production is a structure that is exposed to molten glass with a high temperature and viscosity, and performs rotational motion for a long period of time. Therefore, for a stirrer for glass production, not only the sizes of the members thereof but also the material structure is sufficiently designed in the manufacturing process described above. In this regard, the stirrer shaft to be the rotating shaft receives such a large load as to support the weight of the stirring blades and the stress the stirring blades are subjected to during operation under a high temperature. Therefore, the stirrer shaft is designed to have the corresponding thickness, the material with high strength like a platinum material is used as described above, and the material structure is adjusted.

However, even the stirrer for glass production that is produced under sufficient consideration as described above may be deformed/broken due to long-term service. In particular, it is a problem that a stirrer eforms before it reaches the service life that is estimated in design. While deformation also sometimes occurs to stirring blades, the frequency of occurrence of deformation in stirrer shafts is also high, and deformation such as bending and twisting is seen. In order to improve strength of a stirrer shaft, increasing the wall thickness is effective, but this is difficult to realize from the viewpoint of the size of the device, and is not a preferable measure from the aspect of cost since a large amount of material is required.

### SUMMARY OF THE INVENTION

### Problems to be Solved by the Invention

Consequently, an object of the present invention is to provide a pipe that has higher strength and a lower risk of deformation than the conventional pipes, with respect to a pipe constituting a stirrer shaft of a stirrer for glass production.

### Means for Solving the Problems

As described above, in design of the conventional stirrer shaft pipe, consideration has been given to the material structure, in addition to the dimensional design. The stress that a stirrer shaft is subjected to includes a viscous force of molten glass and the like at the time of an operation of the stirrer, in addition to the weights of the stirring blades. The stress has been deemed to act mainly in the vertical direction (the longitudinal direction of the stirrer shaft). For this reason, in the conventional stirrer shaft pipes, attention has been paid to improvement in strength in the longitudinal direction. Therefore, in the material structure, the section in the longitudinal direction has been regarded as important, and such a consideration as to adjust the crystal grain aspect ratio (longitudinal direction/radial direction) with a processed structure has been given. Since the material structure in the longitudinal direction has attracted much attention, much attention is not given to the material structure in the circumferential direction, and design in strength in this direction has been only adjustment of the wall thickness. Therefore, the present inventors. have considered that in order to improve strength of a stirrer shaft, it is preferable to perform adjustment of the material structure not only in the longitudinal direction but also in the circumferential direction of the pipe, and strengthen the crystal grain aspect ratios in both the directions with good balance.

The crystal grain aspect ratio is generally adjusted by material processing, and processing the material in a constant direction and enhancing the processing rate allows the crystal structure with a high aspect ratio that is long and narrow in the processing direction to be formed. In this regard, in production of the conventional stirrer shaft pipe, only adjustment of the crystal grain aspect ratio with respect to the longitudinal direction after pipe processing has been performed when the plate material before being formed into a pipe is produced by rolling or the like, and the processing rate in this direction has been enhanced. This is because in the prior art, attention is paid to only the material structure in the longitudinal direction as described above.

As the present inventors have considered, in order to improve the strength of a stirrer shaft pipe, it is preferable to adjust the crystal grain aspect ratios in both the longitudinal direction and the circumferential direction. However, it is difficult to perform this for the pipe of the configuration similar to the conventional configuration. This is because while in order to enhance the crystal grain aspect ratio in the circumferential direction, the processing rate in the circumferential direction needs to be enhanced in the production process of the plate material before the plate material is formed into a pipe, the plate material that is produced becomes thin if the processing rate in the circumferential direction is enhanced in addition to the processing rate in the longitudinal direction, and the wall thickness of the pipe becomes insufficient. In this regard, the size of an ingot is increased in order to ensure the processing rate, and after the required processing rate is ensured, the plate material is cut and used at a required size, whereby the insufficiency of the wall thickness of the pipe can be coped with, but this is deemed to be difficult from the relation with the processing facility.

Consequently, the present inventors assumed that they can satisfy the above described contradicting demands by adopting a multilayered structure in which a plurality of pipes are laminated concerning the structure of a stirrer shaft pipe, and combining the pipes with the crystal grain aspect ratios in both the longitudinal direction and the circumferential direction being adjusted, as the pipes that constitute the multilayered structure, and have reached the present invention.

The present invention that solves the above described problem is a stirrer shaft pipe according to claim 1.

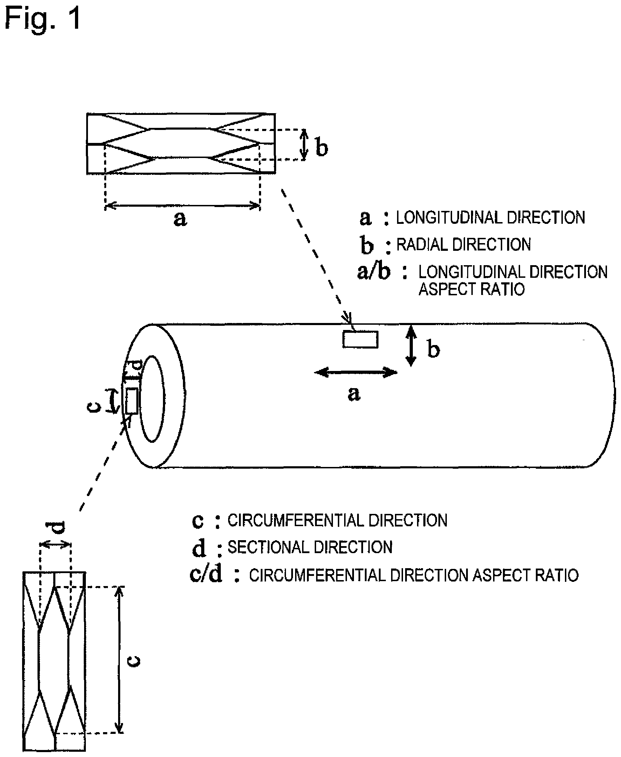

Hereinafter, the present invention will be described in detail. Note that in the present invention, in order to clarify the meanings of the respective directions (the longitudinal direction, the radial direction, the circumferential direction and the sectional direction) for obtaining the crystal grain aspect ratios in the respective sections of the pipe, the respective directions are defined as shown in Fig. 1.

The present invention ensures a required wall thickness by combining pipes with small thicknesses, and sets the number of layers at two to five. With a single layer, it is difficult to set the crystal grain aspect ratio in the circumferential direction within a favorable range while keeping the thickness of the pipe. Further, a structure with so many layers is not effective, and if the pipe with more than five layers is to be produced, the number of steps becomes too large, which affects the production cost.

Moreover, the present invention combines the pipe in which the crystal grain aspect ratios in both the longitudinal direction and the circumferential direction are adjusted, with respect to at least the pipe of one layer. The crystal grain aspect ratio (the longitudinal direction/the radial direction) in the material structure of the section in the longitudinal direction is set at 10 to 100, and this is the range for the stirrer shaft to endure the stress such as the weight of the stirring blades which the stirrer shaft is mainly subjected to, and is the range that has been also taken into consideration in the prior art. Meanwhile, the reason why the crystal grain aspect ratio (the circumferential direction/the sectional direction) in the material structure of the section in the circumferential direction is set at 5 to 100 is to improve strength with consideration given to the crystal grain aspect ratio of the section in the circumferential direction of the conventional stirrer shaft. Namely, the crystal grain aspect ratio of less than 5 does not make difference from the prior art. It is more preferable as the crystal grain aspect ratio is also higher with respect to the circumferential direction, but from the viewpoint of production, the upper limit is set as 100. With respect to these crystal grain aspect ratios, more preferable ranges are 10 to 60 for both of them.

The pipe in which the crystal grain aspect ratios in both of the longitudinal direction and the circumferential direction are adjusted as described above is applied to at least the pipe of one layer. The above described pipe is applied to at least the pipe of one layer like this, whereby strength more than in the prior art can be expected. It is on the pipe of the outermost layer which directly contacts molten glass and has the stirring blade or the like joined thereto that a load is thermally and structurally exerted the most in the stirrer shaft. Thus, it is especially preferable to apply the pipe in which the above described crystal grain aspect ratios are adjusted to the outermost layer.

Note that the crystal grain aspect ratios are preferably in the above described favorable range as a whole. This is because a stirrer shaft pipe having favorable strength in its entirety can ensure durability for a longer time period. Namely, the average values of the crystal grain aspect ratios in the longitudinal direction and the circumferential direction in the pipes constituting the respective layers are preferably 10 to 100 in the section in the longitudinal direction, and the average value of the crystal grain aspect ratio in the section in the circumferential direction is preferably 5 to 100. Note that the average in this case refers to a thickness weighted average with the thicknesses of the respective layers taken into consideration. As the specific calculation method, the value is the result of dividing the total value of the values of all the layers, which are obtained by multiplying the thicknesses of the pipes of the respective layers by the crystal grain aspect ratios, by the thickness of the entire stirrer shaft pipe.

It is the most preferable that in all the pipes constituting the respective layers, the crystal grain aspect ratios in the longitudinal direction are 10 to 100, and the crystal grain aspect ratios in the section in the circumferential direction are 5 to 100. This is because the entire stirrer shaft pipe has substantially uniform strength.

All the thicknesses of the respective pipes do not have to be the same, the pipes with a plurality of thicknesses may be combined and laminated. As the practically preferable thicknesses of the respective pipes to be combined, 1. 5 mm or less is preferable. Further, in order to adjust the wall thickness of the final stirrer shaft pipe, the pipes each with a thickness of 1 mm or less may be combined.

Further, as the component material of the respective pipes, the similar material to the conventional stirrer for glass production is applicable. Various platinum materials (an oxide-dispersion platinum alloy, a platinum alloy (platinum-rhodium alloy, or the like)) are used. Further, the materials of the pipes constituting the respective layers do not have to be completely the same compositions, but are preferably the materials of the same compositions. If the component materials of the respective pipes differ, there is the fear of deformation due to difference in thermal expansion amount.

Further, the stirrer shaft pipe according to the present invention may include a metal layer on an outer side (a surface in contact with molten glass) of the pipe of the outermost layer for protection with glass corrosion, heat resistance and the like taken into consideration. For example, an oxide-dispersion platinum alloy is applied as the component materials of the respective pipes, and the layer of pure platinum may be formed on the outer side thereof. In this case, the pipes of the multilayered structure of the present invention bear the aspect of strength of the stirrer shaft pipe, and the protective metal layer bears the corrosion resistance and the like. As the protective metal layer, a platinum-rhodium alloy, a platinum-gold alloy, pure gold and the like are preferable besides pure platinum, and for them, the aspect ratios do not have to be adjusted. Further, the thickness thereof is not specially limited, and may be equivalent to those of the pipes constituting the present invention.

As for necessity or non-necessity of joining among the respective pipes constituting the stirrer shaft pipe according to the present invention, size matching of the respective pipes is made precisely, and thereby, joining can be made needless. Namely, if the outside diameter of the pipe on the inner side and the inside diameter of the pipe on the outer side are substantially equal, and a gap at the time of superimposition is very small, the pipes can be applied without joining such as brazing and welding. However, even when size matching is precise, the respective pipes may be joined. Joining of the respective pipes is preferably by diffusion welding and forge welding, and the respective pies are preferably integrated by joining such as diffusion welding and forge welding.

Further, as will be described later, as the respective pipes, the pipes each produced by the plate material being rolled into a pipe shape and the both end portions of the plate material abutting on each other being joined to each other can be applied, and when the respective pipes are laminated, the lines connecting the shaft center axis and the joint lines of the respective pipes preferably do not overlap one another in the shaft pipe section. The joint portion is the region in which the thermal history locally differs with respect to the other spots. When the shaft pipe is heated at a high temperature after being made a stirrer, there arises the fear of being deformed due to ununiformity of thermal distortion that occurs. For example, when the stirrer is produced, centering of the shaft is performed, and thereafter annealing is performed, and when the stirrer is heated by molten glass in the glass stirring step, thermal deformation may occur. Thus, the joint lines of the respective pipes are prevented from overlapping, whereby entire deformation is cancelled off, and even if a crack and the like occur to some of the pipes, breakage as a whole can be prevented.

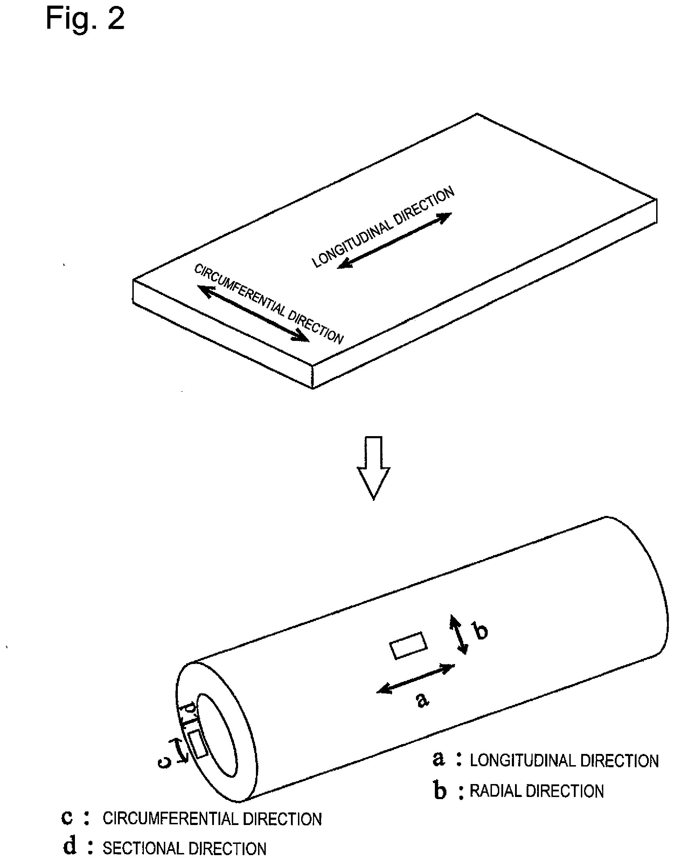

As the production process of the stirrer shaft pipe according to the present invention, an ingot comprising a platinum material is subjected to rolling or the like, and a rectangular plate material is prepared and is rolled into a pipe shape with butting both end portions being joined to each other, which is properly drawn, in accordance with the conventional process. However, the present invention differs from the conventional process in that in production of at least one plate material, the process produces the plate material by giving the processing rate of 75 to 95% with respect to both directions of the longitudinal direction and the circumferential direction when the plate material is made into a pipe. Subsequently, the process repeats the plate material production step a plurality of times, produces a plurality of plate materials to produce pipes, and laminates the respective pipes. Note that as for the processing directions of the plate material, the longitudinal direction and the circumferential direction at the time of the plate material being made the pipe are the processing directions when the state of the plate material being formed into the pipe is assumed as shown in Fig. 2.

The reason why the processing rate is set at 75 to 95% in producing the plate material is to adjust the crystal structures of the sections with respect to both the directions that are the longitudinal direction and the circumferential direction of the plate material and set the crystal grain aspect ratios within the preferable range. As the processing, rolling is applied. Rolling may be performed a plurality of times in accordance with the processing rate and the plate thickness to be a target. Note that in the step of the plate material processing, cutting may be properly performed in accordance with the processing device. The number of the plate materials to be produced corresponds to the number of pipes to be used, but the kind (the plate thickness) of the plate material does not have to be produced for each of the pipes, and the plate materials with common plate thicknesses can be used. As for production of the pipe, the size of the plate material is adjusted to obtain a target diameter in advance, the plate material is rolled up, and both end portions of the plate material are joined to each other, whereby the pipe is made. As for joining for formation of the pipe, thermal diffusion joining, welding, and forge welding are applicable.

Further, as the method for producing the pipe after production of the plate material, the plate material may be deep drawn, other than the above description. In pipe production by deep drawing, the pipes of the respective layers are seamless without joint lines, and are useful in the point of being able to restrain reduction in strength/corrosion resistance due to the presence of joint lines.

After the (two to five) pipes to be laminated are produced, the pipes with small diameters are sequentially inserted into the pipe with a large diameter, and the pipe of a multilayered structure is formed. Subsequently, the pipe of the multilayered structure is drawn with a drawbench or the like in accordance with necessity, and is made a stirrer shaft pipe. The reason why drawing is performed is to perform final size matching of the stirrer shaft pipe, and bring the pipes of the respective layers into closer contact with one another. The processing rate of the drawing is preferably set at 5 to 20%. However, drawing is not an essential process step.

In production of the pipe of a multilayered structure, the pipes of the respective layers may be joined to one another. Joining in this case may be welding, and diffusion welding is preferable. This is because the overlapping portions of the respective pipes can be uniformly joined. When diffusion welding is performed, as the conditions thereof, it is preferable to set the heating temperature at 1400 to 1600°C and perform heating for 0.5 to 5 hours.

Size adjustment may be performed for the stirrer shaft pipe that is produced according to the production process described above, by drawing or the like in accordance with necessity. Thereafter, a stirring blade is joined, whereby the stirrer for stirring glass can be made. Note that the stirring blade to be joined is not specially limited, and the stirring blade of the material and in the shape corresponding to a use purpose is provided.

### ADVANTAGEOUS EFFECT OF INVENTION

As described above, the stirrer shaft pipe according to the present invention has higher strength than the conventional stirrer shaft pipe, and has yield strength to deformation by stress the stirrer shaft pipe receives while being used. Further, with respect to the same requested strength, the stirrer shaft pipe can be made thin, and the effect of reduction in material cost is provided. Furthermore, the stirrer shaft pipe according to the present invention is relatively easily produced, is flexible in size, and therefore is compatible with a large-scale glass production apparatus.

### BRIEF DESCRIPTION OF THE DRAWINGS

[Fig. 1] A view explaining measurement directions of crystal grain aspect ratios in the present invention.
[Fig. 2] A view explaining processing directions in the present invention.
[Fig. 3] A diagram explaining production conditions of plate materials produced in a present embodiment.
[Fig. 4] A schematic view of a creep test specimen.
[Fig. 5] A photograph showing sectional structures in longitudinal directions and circumferential directions of example 3 and a comparative example.
[Fig. 6] A schematic view explaining a manufacturing process of a conventional stirrer for stirring glass.

### DETAILED DESCRIPTION OF THE PREFERRED EMBODIMENTS

Hereinafter, preferred embodiments of the present invention are described.

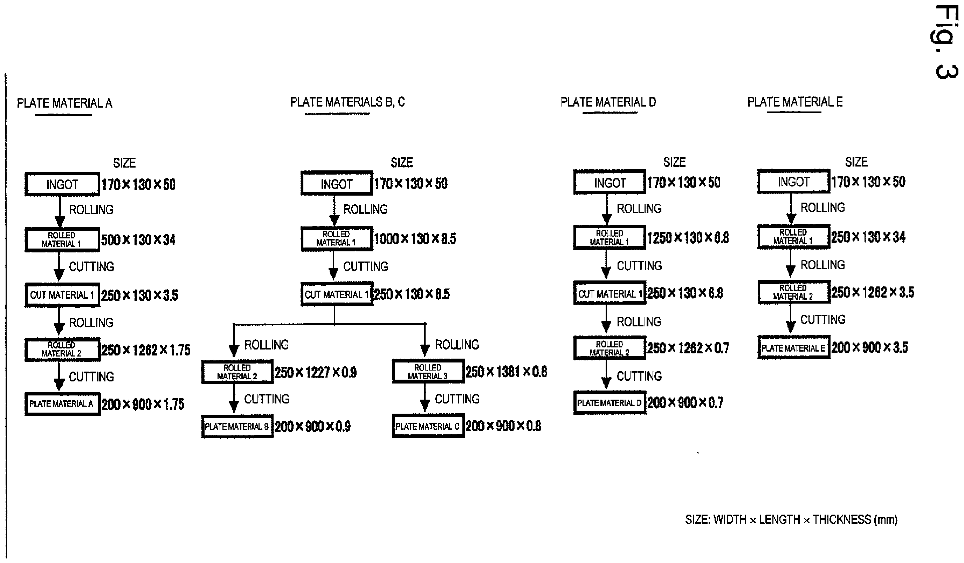

First Embodiment: In the embodiment, a plurality of plate materials that went through several processing steps were produced from one kind of ingot, and were processed into pipes, and thereafter, a stirrer shaft pipe having a multilayered structure was produced. The ingot used here was the ingot (dimensions: 170 mm wide by 130 mm long by 50 mm thick) of a strengthened platinum alloy (made by Tanaka Kikinzoku Kogyo K. K., trade name: Nano-Plat-BPR). With the ingot as a raw material, five kinds of plate materials in Table 1 were produced. The dimensions of the plate materials were 200 mm wide by 900 mm long, and the thicknesses vary according to the plate materials. The details of the processing histories of the respective plate materials are shown in Fig. 3, and the final processing rates and the sectional crystal grain aspect ratios thereof are shown in Table 1.

**[Table 1]**

| | PLATE THICKNESS | PLATE MATERIAL PROCESSING RATE | | SECTIONAL ASPECT RATIO | |
|---|---|---|---|---|---|
| | | LONGITUDINAL DIRECTION | CIRCUMFERENTIAL DIRECTION | LONGITUDINAL DIRECTION | CIRCUMFERENTIAL DIRECTION |
| PLATE MATERIAL A | 1.75 mm | 89% | 66% | 40 | 6 |
| PLATE MATERIAL B | 0.9 mm | 89% | 83% | 40 | 20 |
| PLATE MATERIAL C | 0.8 mm | 89% | 83% | 40 | 20 |
| PLATE MATERIAL D | 0.7 mm | 90% | 86% | 40 | 25 |
| PLATE MATERIAL E | 3.5 mm | 89% | 32% | 40 | 3 |

The plate materials A to E produced in the above description were used to be formed into pipes, and were properly laminated, and the stirrer shaft pipes each with the total thickness of 3. 5 mm were produced. What were produced were the stirrer shaft pipe of two layers with use of two plate materials A (Example 1), the stirrer shaft pipe of four layers with use of three of the plate materials B and one plate material C (Example 2), and the stirrer shaft pipe (Example 3) of five layers with use of five plate materials D. Further, the stirrer shaft pipe of a single layer was also produced with use of one plate material E (Comparative Example).

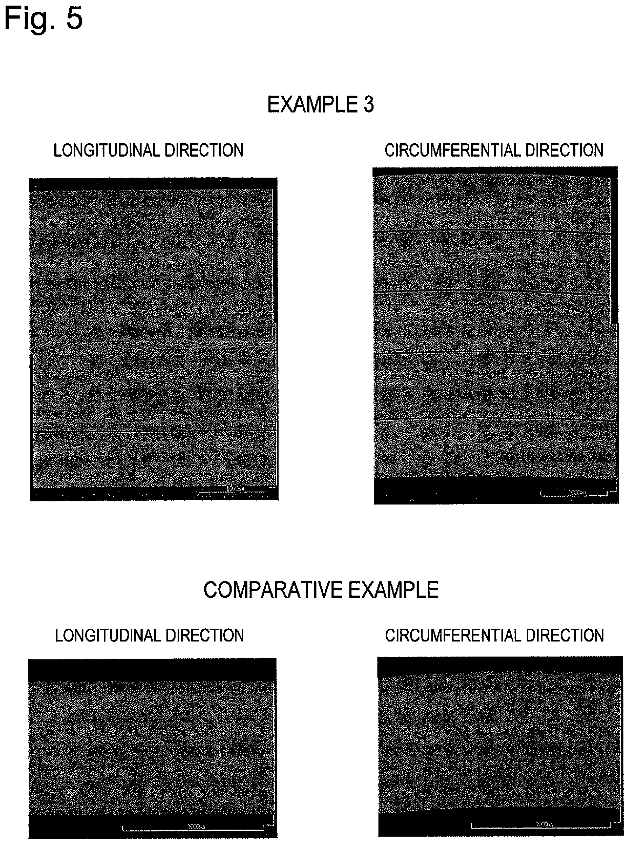

Fig. 5 shows sectional structures (longitudinal directions and circumferential directions) of the stirrer shaft pipes of Example 3 and Comparative Example. From Fig. 5, in the stirrer shaft pipe of Comparative Example, the aspect ratio of the section in the longitudinal direction is high, but the aspect ratio of the section in the circumferential direction is low. Meanwhile, in the example, the aspect ratio of the section in the circumferential direction is also high.

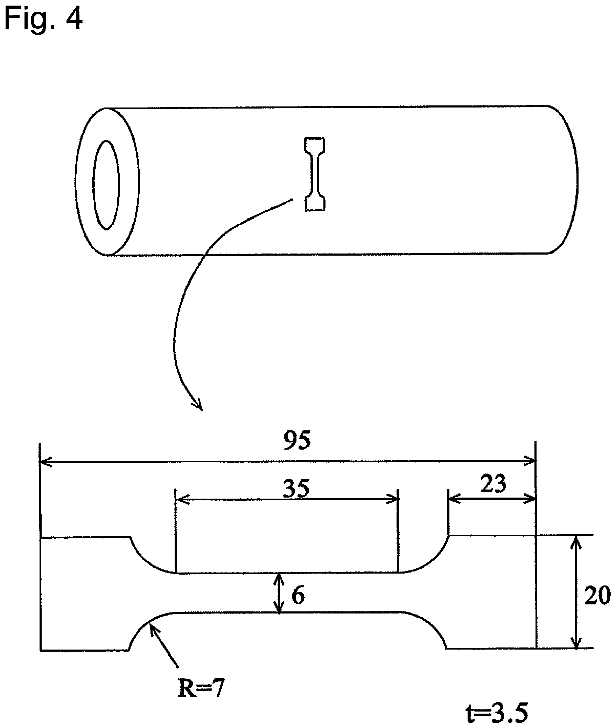

Subsequently, a creep strength test was conducted with respect to the stirrer shaft pipes that were produced,. In the creep test, the test specimens were cut out and processed as shown in Fig. 4 so that the load directions were in the circumferential directions, and the rapture times were measured with a load set at 25 MPa and a test temperature set at 140°C. The result is shown in Table 2.

**[Table 2]**

| | NUMBER OF LAYERS | PLATE MATERIALS USED | SECTIONAL ASPECT RATIO (AVERAGE) | | RUPTURE TIME |
|---|---|---|---|---|---|
| | | | LONGITUDINAL DIRECTION | CIRCUMFERENTIAL DIRECTION | |
| EXAMPLE 1 | 2 | Ax2 | 40 | 6 | 35 HOURS |
| EXAMPLE 2 | 4 | Bx3, Cx1 | 40 | 21.1 | 243 HOURS |
| EXAMPLE 3 | 5 | Dx5 | 40 | 25 | 252 HOURS |
| COMPARATIVE EXAMPLE | 1 | E | 40 | 3 | 24 HOURS |

From Table 2, it is found that in the stirrer shaft pipes having multilayered structures according to the respective examples, the creep rupture times increase more than that of the comparative example with a single layer. In particular, it is found that in examples 2 and 3, the creep rupture times are extended to be ten times as long as that of the comparative example or more.

Second Embodiment: In the embodiment, the stirring rods were produced from three kinds of stirrer shaft pipes of the stirrer shaft pipes produced in Example 3 and Comparative Example, and the stirrer shaft pipe (described as Example 4) produced by deep drawing, and the molten glass was subjected to a stirring test of.

As for the stirrer shaft pipe of Example 4, the plate material (thickness of 0.7 mm) produced under the same conditions as the plate material D of First Embodiment was deep-drawn to be pipes, and these pipes were laminated to be the stirrer shaft pipe. The stirring rod was produced by four stirring blades each in a round rod shape being welded to each of the respective stirrer shaft pipes at the same intervals.

In the stirring test of molten glass, molten glass was charged into a stirring tank, and was stirred with the stirring rod for a predetermined time period, and deformation of the stirring rod thereafter was evaluated. Note that the temperature of the molten glass was controlled to be 1450°C to 1500°C. The number of rotations of stirring rod was set at 15 rpm, and the stirring time period was set at 400 hours.

When the stirring rods were taken out and cooled, the glass adhering to the stirring rods was removed, and deformation of the stirrer shaft pipes were examined, after the stirring test, a trace of deformation was not found at all in the stirring shaft pipes of Examples 3 and 4. Though large deformation was not found in the stirrer shaft pipe of the single layer of the comparative example, bending and twisting of the order of millimeters occurred. It is conceivable that even in the stirrer shaft pipe of the comparative example, the problem that abruptly stops the operation, such as rapture and large deformation, does not arise, but it is predicted that with use for a long period of time, the trouble that makes the molten glass flow irregular or the like is likely to occur.

### INDUSTRIAL APPLICABILITY

The stirrer shaft pipe according to the present invention has high strength since a multilayered structure is adopted, and the crystal grain aspect ratio in the material structure of the section in the circumferential direction is adjusted, in addition to that of the section in the longitudinal direction. The glass stirring rod to which the present invention is applied can be used stably with less long-term shape change. Further, the size adjustment thereof is also easy, and therefore, the glass stirring rod is compatible with a small-scale glass production apparatus to a large-scale glass production apparatus in a wide range.

## Claims

1. A stirrer shaft pipe constituting a shaft of a stirrer for glass production comprising a shaft and a stirring blade protrusively provided at the shaft, the stirrer shaft pipe comprising a platinum material, wherein a multilayered structure of n layers (n = 2 to 5) in which a plurality of pipes are laminated, and wherein, in at least the pipe of one layer of the plurality of pipes constituting the multilayered structure, a crystal grain aspect ratio (a longitudinal direction/a radial direction) in a material structure of a section in the longitudinal direction is 10 to 100, and a crystal grain aspect ratio (a circumferential direction/ a sectional direction) in the material structure of a section in the circumferential direction is 5 to 100.

2. The stirrer shaft pipe according to claim 1,
wherein with respect to the plurality of pipes constituting the multilayered structure, thickness weighted averages of the crystal grain aspect ratios (the longitudinal direction/the radial direction) in material structures of sections in the longitudinal direction are 10 to 100, and thickness weighted averages of the crystal grain aspect ratios (the circumferential direction/the sectional direction) in the material structures of sections in the circumferential direction are 5 to 100.

3. The stirrer shaft pipe according to claim 1 or claim 2,
wherein in all of the plurality of pipes constituting the multilayered structure, the crystal grain aspect ratios (the longitudinal direction/the radial direction) in material structures of sections in the longitudinal direction are 10 to 100, and the crystal grain aspect ratios (the circumferential direction/the sectional direction) in the material structure of sections in the circumferential direction are 5 to 100.

4. The stirrer shaft pipe according to any one of claims 1 to 3,
wherein a protective metal layer is provided on an outer side of a pipe to be an outermost layer.

5. The stirrer shaft pipe according to any one of claim 1 to claim 4,
wherein the plurality of pipes constituting the multilayered structure are integrated by diffusion joining or forge welding.

6. The stirrer shaft pipe according to any one of claim 1 to claim 5,
wherein the plurality of pipes constituting the multilayered structure are each formed by a plate material being rolled into a pipe shape, and both end portions of the plate material abutting on each other being joined to each other, and
respective pipes are laminated in such a manner that in a shaft section, lines connecting a shaft center axis and joint lines of the respective pipes do not overlap one another.

7. A method for producing the stirrer shaft pipe, the pipe defined in any one of claim 1 to claim 6, comprising:
a step of producing a plurality of plate materials from an ingot comprising a platinum material, a step of producing a plurality of pipes by rolling the plate materials into pipe shapes and joining both end portions of the plate materials abutting on each other, and a step of making a pipe having a multilayered structure by laminating the produced plurality of pipes,
wherein the step of producing the plurality of plate materials produces the plate material by giving processing rates of 75 to 95% with respect to both directions of a longitudinal direction and a circumferential direction when the plate material is formed into a pipe, with respect to at least one of the plate materials.

8. The method for producing the stirrer shaft pipe, the pipe defined in any one of claim 1 to claim 5, comprising:
a step of producing a plurality of plate materials from an ingot comprising a platinum material, a step of producing a plurality of pipes by subjecting the plate materials to deep drawing, and a step of laminating the plurality of pipes produced to make a pipe having a multilayered structure,
wherein the step of producing the plurality of plate materials produces the plate material by giving processing rates of 75 to 95% with respect to both directions of a longitudinal direction and a circumferential direction when the plate material is formed into a pipe, with respect to at least one of the plate materials.

## Patentansprüche

1. Rührwellenrohr, das eine Welle eines Rührers für die Glasherstellung bildet und eine Welle und ein Rührblatt aufweist, das vorspringend an der Welle bereitgestellt ist, wobei das Rührwellenrohr Platinmaterial aufweist, wobei bei einer mehrlagigen Struktur von n Schichten (n = 2 bis 5) eine Mehrzahl von Rohren laminiert ist, und wobei bei wenigstens dem Rohr einer Schicht der Mehrzahl von Rohren, die die mehrlagige Struktur bilden, ein Kristallkornaspektverhältnis (Längsrichtung/Radialrichtung) in einer Materialstruktur eines Abschnitts in Längsrichtung 10 bis 100 beträgt, und ein Kristallkornaspektverhältnis (Umfangsrichtung/Schnittrichtung) in der Materialstruktur eines Abschnitts in Umfangsrichtung 5 bis 100 beträgt.

2. Rührwellenrohr nach Anspruch 1,
wobei in Bezug auf die Mehrzahl von Rohren, die die mehrlagige Struktur bilden, schichtdickengewichtete Mittelwerte der Kristallkornaspektverhältnisse (Längsrichtung/ Radialrichtung) in Materialstrukturen von Abschnitten in Längsrichtung 10 bis 100 betragen, und schichtdickengewichtete Mittelwerte der Kristallkornaspektverhältnisse (Umfangsrichtung/Schnittrichtung) in den Materialstrukturen von Abschnitten in Umfangsrichtung 5 bis 100 betragen.

3. Rürwellenrohr nach Anspruch 1 oder Anspruch 2,
wobei in allen Rohren der Mehrzahl von Rohren, die die mehrlagige Struktur bilden, die Kristallkornaspektverhältnisse (Längsrichtung/Radialrichtung) in Materialstrukturen von Abschnitten in Längsrichtung 10 bis 100 betragen, und die Kristallkornaspektverhältnisse (Umfangsrichtung/Schnittrichtung) in der Materialstruktur von Abschnitten in Umfangsrichtung 5 bis 100 betragen.

4. Rührwellenrohr nach einem der Ansprüche 1 bis 3,
wobei eine Schutzmetallschicht an einer Außenseite eines Rohrs als äußerste Schicht vorgesehen ist.

5. Rührwellenrohr nach einem der Ansprüche 1 bis 4,
wobei die Mehrzahl an Rohren, die die mehrlagige Struktur bilden, durch Diffusionsverbinden oder Feuerschweißen integriert sind.

6. Rührwellenrohr nach einem der Ansprüche 1 bis 5,
wobei die Mehrzahl von Rohren, die die mehrlagige Struktur bilden, jeweils von einem Plattenmaterial gebildet sind, das zu einer Rohrform gerollt ist, und wobei beide Endabschnitte des Plattenmaterials, die aneinander anstoßen, miteinander verbunden werden, und
wobei entsprechende Rohre auf derartige Weise laminiert sind, dass in einem Wellenabschnitt Fugen, die eine Wellenmittelachse mit Trennfugen der entsprechenden Rohre verbinden, einander nicht überlappen.

7. Verfahren zur Erzeugung des Rührwellenrohrs, wobei das Rohr nach einem der Ansprüche 1 bis 6 definiert ist, wobei das Verfahren Folgendes aufweist:
einen Schritt der Erzeugung einer Mehrzahl von Plattenmaterialien aus einem Rohling, der Platinmaterial aufweist, einen Schritt der Erzeugung einer Mehrzahl von Rohren durch Rollen der Plattenmaterialien zu Rohrformen und Verbinden beider Endabschnitte der Plattenmaterialien, die aneinander anstoßen, und einen Schritt der Herstellung eines Rohrs mit einer mehrlagigen Struktur durch Laminieren der erzeugten Mehrzahl von Rohren,
wobei der Schritt der Erzeugung der Mehrzahl von Plattenmaterialien das Plattenmaterial durch gegebene Verarbeitungsraten von 75% bis 95% in Bezug auf sowohl die Richtung einer Längsrichtung als auch einer Umfangsrichtung erzeugt, wenn das Plattenmaterial zu einem Rohr geformt wird, in Bezug auf wenigstens eines der Plattenmaterialien.

8. Verfahren zur Erzeugung des Rührwellenrohrs, wobei das Rohr nach einem der Ansprüche 1 bis 5 definiert ist, wobei das Verfahren Folgendes aufweist:
einen Schritt der Erzeugung einer Mehrzahl von Plattenmaterialien aus einem Rohling, der Platinmaterial aufweist, einen Schritt der Erzeugung einer Mehrzahl von Rohren durch Tiefziehen der Plattenmaterialien, und einen Schritt des Laminierens der erzeugten Mehrzahl von Rohren zur Erzeugung eines Rohrs mit einer mehrlagigen Struktur,
wobei der Schritt der Erzeugung der Mehrzahl von Plattenmaterialien das Plattenmaterial durch gegebene Verarbeitungsraten von 75% bis 95% in Bezug auf sowohl die Richtung einer Längsrichtung als auch einer Umfangsrichtung erzeugt, wenn das Plattenmaterial zu einem Rohr geformt wird, in Bezug auf wenigstens eines der Plattenmaterialien.

## Revendications

1. Tube d'arbre d'agitateur constituant un arbre d'un agitateur pour la production de verre comprenant un arbre et une pale d'agitation prévue en saillie au niveau de l'arbre, le tube d'arbre d'agitateur comprenant un matériau de platine, où une structure multicouche de n couches (n = 2 à 5) dans laquelle une pluralité de tubes sont stratifiés, et, où, dans au moins le tube d'une couche de la pluralité de tubes constituant la structure multicouche, un rapport d'aspect de grain cristallin (direction longitudinale/direction radiale) dans une structure de matériau d'une section dans la direction longitudinale est de 10 à 100, et un rapport d'aspect de grain cristallin (direction circonférentielle/direction transversale) dans la structure de matériau d'une section dans la direction circonférentielle est de 5 à 100.

2. Tube d'arbre d'agitateur selon la revendication 1,
dans lequel, par rapport à la pluralité de tubes constituant la structure multicouche, les moyennes pondérées en fonction de l'épaisseur des rapports d'aspect de grain cristallin (direction longitudinale/direction radiale) dans des structures de matériau de sections dans la direction longitudinale sont de 10 à 100, et des moyennes pondérées en fonction de l'épaisseur des rapports d'aspect de grain cristallin (direction circonférentielle/direction transversale) dans les structures de matériau de sections dans la direction circonférentielle sont de 5 à 100.

3. Tube d'arbre d'agitateur selon la revendication 1 ou 2,
dans lequel, dans l'ensemble de la pluralité de tubes constituant la structure multicouche, les rapports d'aspect de grain cristallin (direction longitudinale/direction radiale) dans des structures de matériau de sections dans la direction longitudinale sont de 10 à 100, et les rapports d'aspect de grain cristallin (direction circonférentielle/direction transversale) dans la structure de matériau de sections dans la direction circonférentielle sont de 5 à 100.

4. Tube d'arbre d'agitateur selon l'une quelconque des revendications 1 à 3,
dans lequel une couche métallique de protection est prévue sur un côté externe d'un tube devant être la couche la plus externe.

5. Tube d'arbre d'agitateur selon l'une quelconque des revendications 1 à 4,
dans lequel la pluralité de tubes constituant la structure multicouche sont intégrés par assemblage par diffusion ou soudage à la forge.

6. Tube d'arbre d'agitateur selon l'une quelconque des revendications 1 à 5,
dans lequel chacun de la pluralité de tubes constituant la structure multicouche est formé par un matériau en plaque qui est enroulé sous forme de tube, et les deux parties d'extrémité du matériau en plaque en butée l'une contre l'autre étant assemblées l'une à l'autre, et
des tubes respectifs sont stratifiés de sorte que dans une section d'arbre, des lignes reliant un axe central d'arbre et des lignes d'assemblage des tubes respectifs ne se chevauchent pas.

7. Procédé de production du tube d'arbre d'agitateur, le tube étant défini dans l'une quelconque des revendications 1 à 6, comprenant :
une étape de production d'une pluralité de matériaux en plaque à partir d'un lingot comprenant un matériau de platine, une étape de production d'une pluralité de tubes en enroulant des matériaux en plaque sous formes de tubes et en assemblant les deux parties d'extrémité des matériaux en plaque en butée l'une contre l'autre, et une étape de fabrication d'un tube présentant une structure multicouche par stratification de la pluralité de tubes produits,
où l'étape de production de la pluralité de matériaux en plaque produit le matériau en plaque en donnant des taux de traitement de 75 à 95 % par rapport aux deux directions d'une direction longitudinale et d'une direction circonférentielle lorsque le matériau en plaque est façonné en forme de tube, par rapport à au moins l'un des matériaux en plaque.

8. Procédé de production du tube d'arbre d'agitateur, le tube étant défini dans l'une quelconque des revendications 1 à 5, comprenant :
une étape de production d'une pluralité de matériaux en plaque à partir d'un lingot comprenant un matériau de platine, une étape de production d'une pluralité de tubes en soumettant les matériaux en plaque à un emboutissage profond, et une étape de stratification de la pluralité de tubes produits pour fabriquer un tube ayant une structure multicouche,
où l'étape de production de la pluralité de matériaux en plaque produit le matériau en plaque en donnant des taux de traitement de 75 à 95 % par rapport aux deux directions d'une direction longitudinale et d'une direction circonférentielle lorsque le matériau en plaque est façonné en forme de tube, par rapport à au moins l'un des matériaux en plaque.
